# EUROPÄISCHE PATENTSCHRIFT

(11) **EP 2 997 519 B1**
(45) Veröffentlichungstag und Bekanntmachung des Hinweises auf die Patenterteilung: **01.08.2018**
(21) Anmeldenummer: 14733689.5
(22) Anmeldetag: 16.05.2014
(51) Int. Cl.: G06K 7/01, G06K 7/015, G06K 7/14

(54) **VERFAHREN ZUM AUFFINDEN EINES OBJEKTS**
METHOD FOR FINDING AN OBJECT
PROCÉDÉ DE DÉCOUVERTE D'UN OBJET

(30) Priorität: 17.05.2013 AT 4122013
(43) Veröffentlichungstag der Anmeldung: 23.03.2016
(73) Patentinhaber: Moorecroft Llp, London WC1R 4HE (GB)
(72) Erfinder: HOPF, Richard, G., 1120 Wien (AT)
(74) Vertreter: Keschmann, Marc
(86) Internationale Anmeldenummer: PCT/IB2014/000746
(87) Internationale Veröffentlichungsnummer: WO 2014/184646

(56) Entgegenhaltungen:
- JP-A- 2007 207 085
- US-A1- 2009 108 073

## Beschreibung

Die Erfindung betrifft ein Verfahren zum Auffinden eines Objekts, insbesondere einer mit einem optisch abtastbaren Code versehenen Fläche, mittels eines einen Bildsensor aufweisenden mobilen elektronischen Geräts und zum Ausrichten des mobilen Geräts an dem Objekt.

Mobile Geräte mit Bildsensor, grafischem Display, Lautsprecher und Vibrationsmodul ermöglichen Anwendungen, bei denen die Notwendigkeit besteht, physische Objekte zu erkennen. Eine klassische Anwendung ist das Scannen von graphischen Codes, wie z.B. Barcodes oder QR-Codes. Solche Codes bestehen aus einer Anordnung, z.B. in Form einer quadratischen Matrix aus schwarzen und weißen Punkten oder Strichen, welche die codierten Daten binär darstellen. Wenn solche Codes mittels eines Bildsensors eines mobilen Geräts aufgenommen werden, können sie im Gerät decodiert und weiterverarbeitet werden. Auf Grund der begrenzten Darstellungsdichte der graphischen Codes repräsentieren die codierten Daten meist lediglich einen Verweis, wie z.B. Internet-Link, auf die eigentlichen Daten, die in der Folge über eine Telekommunikationsverbindung abgerufen und so auf das mobile Geräte gebracht werden müssen.

Es sind aber auch schon graphische Codes bekannt geworden, die eine wesentlich höhere Darstellungsdichte bzw. Auflösung ermöglichen, beispielsweise durch Erweiterung des Farbspektrums von schwarz/weiß auf eine Vielzahl von Farben. Hierzu wird auf die WO 2008/131470 A1 verwiesen. Solche Codes sind in der Lage Audio- und/oder Videoinhalte zu codieren, die unmittelbar am mobilen Gerät wiedergegeben werden können ohne dass es einer Kommunikationsverbindung zu einem Server oder dgl. bedarf. Mögliche Anwendungen sind das Codieren von Sprachinhalten für Analphabeten, Blinde oder Menschen, die die jeweilige Landessprache nicht beherrschen.

Um solche Anwendungen realisieren zu können, ist es notwendig, den Benutzer in die Lage zu versetzen, das mobile Gerät in einen räumlichen Bezug zum physischen Objekt zu bringen, und zwar derart, dass das Objekt in den Erfassungsbereich des Bildsensors gelangt. Dies stellt unter normalen Umständen keine Schwierigkeit dar, weil die herkömmlichen Geräte derart konfiguriert sind, dass das vom Bildsensor aufgenommene Bild in Echtzeit auf einer Anzeige des Geräts dargestellt wird, sodass der Benutzer die Position des Geräts samt Bildsensor so lange verändern kann, bis sich das Objekt bzw. der graphische Code im Erfassungsbereich oder in einem vordefinierten Ausschnitt des Erfassungsbereichs befindet, worauf der graphische Code gescannt werden kann. Bei eingeschränkter Sensorik des Benutzers, wie z.B. bei Sehschwäche oder Blindheit ist dies jedoch nicht ohne weiteres möglich.

Die JP 2007207085 A offenbart einen Scanner, welcher zum Einlesen eines auf einem Mobiltelefon angezeigten QR-Codes ausgebildet ist.

Die vorliegende Erfindung zielt daher darauf ab, ein Verfahren zu schaffen, welches es dem Benutzer erleichtert, ein Objekt, wie z.B. einen graphischen Code in den Erfassungsbereich des Bildsensors eines mobilen Geräts zu bringen.

Zur Lösung dieser Aufgabe umfasst das Verfahren im Wesentlichen
- in einer Suchphase, das Bewegen des mobilen Geräts während der Bildsensor Bilder der Umgebung erfasst und das Vornehmen einer elektronischen Bildauswertung, um charakteristische Merkmale des aufzufindenden Objekts zu identifizieren, wobei bei Identifizierung des Objekts ein optisches, akustisches und/oder taktiles Signal generiert wird,
- in einer Annäherungsphase, das Erfassen mittels des Bildsensors von Bildern und das Vornehmen einer elektronischen Bildauswertung dahingehend, zu welchem Anteil sich das identifizierte Objekt innerhalb des Erfassungsbereichs des Bildsensors befindet, wobei in Abhängigkeit vom Ergebnis der Bildauswertung optische, akustische und/oder taktile Signale generiert werden, die dem Benutzer eine Annäherungsbewegung signalisieren, bis das gesamte Objekt sich innerhalb des Erfassungsbereichs des Bildsensors befindet, und
- in einer Justierphase, das Erfassen mittels des Bildsensors von Bildern des Objekts und das Vornehmen einer elektronischen Bildauswertung dahingehend, ob sich das Objekt innerhalb eines vordefinierten Teilbereichs des Erfassungsbereichs des Bildsensors befindet, wobei in Abhängigkeit vom Ergebnis der Bildauswertung optische, akustische und/oder taktile Signale generiert werden, die dem Benutzer eine Justierbewegung signalisieren, bis das gesamte Objekt sich innerhalb des vordefinierten Teilbereichs des Erfassungsbereichs befindet,
wobei die Bilder in der Suchphase mit höherer Bildwiederholrate und/oder mit niedrigerer Bildauflösung erfasst werden als in der Annäherungsphase.

Das erfindungsgemäße Verfahren ist dabei bevorzugt als Software-Applikation auf einem mobilen elektronischen Gerät, wie z.B. einem Mobiltelefon implementiert und erlaubt es einem Benutzer auf Grund der dreistufigen Vorgehensweise auch bei eingeschränkter Sensorik ein physisches Objekt effizient und zuverlässig aufzufinden. Der Benutzer wird durch die erfindungsgemäße Abfolge von Suchschritten zum Halter des Gerätes reduziert, da die Applikation selbst entscheiden kann, inwieweit der räumliche Bezug zwischen dem mobilem Gerät und dem aufzufindenden physischen Objekt gegeben ist. Der Benutzer trifft die Entscheidung, inwieweit der räumliche Bezug gegeben ist nicht selbst, sondern wird durch die Anwendung geführt. Die Kommunikation zwischen der Anwendung und dem Benutzer erfolgt in Abhängigkeit von der dem Benutzer zur Verfügung stehenden Sensorik (Hörsinn, Sehsinn, Tastsinn) durch optische, akustische und/oder taktile Signale. Eine bevorzugte Ausführung sieht hierbei vor, dass die Art der Signalgenerierung (optisch, akustisch und/oder taktil) in Abhängigkeit von der Funktionsfähigkeit und der Umgebungsbeeinträchtigungen der Sensorik des Benutzers einstellbar ist. So kann z.B. ein blinder Mensch sich besser auf seine restlichen Sinne konzentrieren und annähernd zum gleichen Anwendungsergebnis kommen wie ein Mensch ohne Beeinträchtigung. In Umgebungen mit starkem Lärmaufkommen, kann sich ein sehender Mensch vermehrt auf seinen Sehsinn anstatt auf akustische Signale konzentrieren.

Die Strukturierung des Suchverfahrens in drei Abschnitte erlaubt ein effizientes und schnelles Auffinden eines Objekts, da zuerst (Suchphase) lediglich eine grobe und damit schnelle Lokalisierung des Objekts und erst in den nachfolgenden Schritten (Annäherungsphase, Justierphase) eine detailliertere Positionsauswertung erfolgt. Dadurch kann die meist begrenzte Rechenkapazität des mobilen Geräts optimal genützt werden. Die Aufteilung des Verfahrens in drei Abschnitte erlaubt es weiters, dem Benutzer durch die Wahl von für die einzelnen Phasen spezifischen Signalen besser mitzuteilen, in welcher der einzelnen Phasen er sich befindet, sodass der Benutzer seine Suchbewegungen anpassen kann. Dadurch wird weiters der Vorteil erreicht, den Vorgang der ersten Grobsuche bis hin zur Feinabstimmung bei Annäherung in unterschiedlichen Wahrnehmungsstufen zu realisieren. Auf diese Art und Weise kann der Umstand ausgenützt werden, dass der Mensch auf optische und akustische Reize schneller und genauer reagiert als auf ein gesprochenes Wort. So kann z.B. die Kommunikation mit dem Benutzer in der ersten Suchphase mittels eines akustischen Signals, z.B. einem Dauerton erfolgen, wobei die Lautstärke in Abhängigkeit vom räumlichen Bezug zwischen dem Objekt und dem mobilen Gerät moduliert wird. Je lauter der Ton ist, umso mehr ist der räumliche Bezug gegeben. Sollte der räumliche Bezug grob gegeben sein, so kann in der nachfolgenden Annäherungsphase die Signalisierung mittels Sprachwiedergabe erfolgen. Aufforderungen wie "nach rechts" vermitteln dem Benutzer hierbei bereits die Lage des Objektes zum Gerät. Verschiebungen und Verdrehungen des mobilen Gerätes in Bezug zum Objekt können durch Sprachanweisungen sehr genau und verständlich erfolgen. In der anschließenden Justierphase kann das Bewegen des mobilen Gerätes relativ zum Objekt z.B. mittels einer Kombination von modulierten Tonfolgen, optischen Darstellungen und Vibrationen unterstützt werden.

Das beim erfindungsgemäßen Verfahren vorgesehene Aufnehmen von Umgebungsbildern mittels eines Bildsensors und die elektronische Auswertung der aufgenommenen Bilder kann mit herkömmlichen mobilen Geräten, wie z.B. Mobiltelefonen ("Smartphones") ohne weiteres realisiert werden. Die meisten Mobiltelefone verfügen ohnehin über einen Bildsensor, der das Aufnehmen von stehenden oder bewegten Bildern ermöglicht. Die Bildauswertung kann bevorzugt mittels einer Softwareanwendung vorgenommen werden, wobei dem Fachmann die geeigneten Programmanweisungen grundsätzlich bekannt sind und davon abhängen, welches Ziel die Bildauswertung verfolgt. So umfasst die Bildauswertung in der Suchphase bevorzugt einen Algorithmus zur Kantenfindung, insbesondere einen Sobel-Algorithmus, einen Laplace-Filter oder einen Canny-Algorithmus. Dabei handelt es sich um dem Fachmann geläufige Algorithmen, die ohne weiteres in Software implementiert werden können, wobei die Rechenkapazitäten von herkömmlichen Mobiltelefonen ausreichen, um eine Echtzeit-Auswertung zu erzielen. Um die Kantenfindung zu erleichtern, kann vorgesehen sein, dass das aufzufindende Objekt, wie z.B. der aufgebrachte Code, von einem charakteristischen, sich von der Umgebungsfläche optisch abhebenden Rahmen umgeben ist oder diesen aufweist.

Die Qualität und die Geschwindigkeit der Bildauswertung hängen naturgemäß von dem auszuwertenden Datenumfang ab. In diesem Zusammenhang gelingt eine Optimierung erfindungsgemäß dadurch, dass die Bilder in der Suchphase mit höherer Bildwiederholrate und/oder mit niedrigerer Bildauflösung erfasst werden als in der Annäherungsphase. In der Suchphase ist eine höhere Bildwiederholrate vorteilhaft, um einer schnelleren Bewegung des mobilen Geräts Rechnung zu tragen. Die Auflösung kann hingegen soweit reduziert werden, dass die erwähnte Identifizierung des gesuchten Objekts z.B. mit Hilfe eines Kantenfindungsalgorithmus gerade noch möglich ist. In der Annäherungs- und/oder der Justierphase kann die Bildwiederholrate erniedrigt werden, da die Bewegungen des mobilen Geräts in diesen Phasen nur mehr in geringerem Ausmaß erfolgen. Allerdings ist in diesen Phasen eine höhere Bildauflösung vorteilhaft, um eine möglichst detaillierte Bildauswertung dahingehend zu ermöglichen, ob sich das Objekt in einem genau bestimmten Erfassungsbereich des Bildsensors befindet.

Bei dem aufzufindenden Objekt handelt es sich insbesondere um eine Fläche mit einem optisch abtastbaren Code. Der Code ist beispielsweise als QR-Code oder als Code gemäß der WO 2008/131470 A1 ausgebildet. Insbesondere besteht ein solcher Code aus einer Anordnung, z.B. in Form einer quadratischen Matrix aus schwarzen und weißen oder aus färbigen Punkten oder Strichen, welche die codierten Daten binär darstellen. Im Falle der Ausbildung gemäß der WO 2008/131470 A1 sind die Daten in Farb- und Bildpunkte kodiert und die kodierten Daten mit Raster-, Farbkalibrierungs- und/oder Schlüsselinformationen auf einer Trägerfläche in optisch lesbarer Form aufgebracht, wobei die Farb- bzw. Bildpunkte mittels eines optoelektronischen Sensors abgetastet und unter Verwendung der Raster-, Farbkalibrierungs- und/oder Schlüsselinformationen dekodiert werden. Dadurch, dass nun zusätzlich zu den Farb- und Bildpunkten Raster-, Farbkalibrierungs- und/oder Schlüsselinformationen bereitgestellt werden, wird die Möglichkeit geschaffen, eine wesentlich größere Zahl unterschiedlicher Farben sicher unterscheidbar zu machen und auf diese Weise die Datendichte auf einer Anzeigefläche zu erhöhen. Vorteilhafterweise könne die Raster-, Farbkalibrierungs- und/oder Schlüsselinformationen als die codierten Daten umgebender Rahmen aufgebracht sein, wobei ein solcher Rahmen ein charakteristisches Element bilden kann, das im Rahmen der Kantenfindung besonders leicht identifiziert werden kann.

Nachdem das gesuchte Objekt bzw. der Code aufgefunden worden ist, d.h. nach Beendigung der drei erfindungsgemäß vorgesehenen Phasen, ist das mobile Gerät so positioniert, dass der Code z.B. mit dem eingebauten Bildsensor abgetastet und decodiert werden kann. Dieser Vorgang kann beispielsweise durch Drücken einer Taste oder durch Berühren eines vorbestimmten Bereichs einer berührungsempfindlichen Anzeigevorrichtung ("touchscreen") erfolgen. Das Drücken eines Auslöseknopfes oder dgl. durch den Benutzer unterliegen jedoch fast immer der Beeinträchtigung durch die Bewegung der menschlichen Hand und ihrer Finger, sodass es zu Verwackelungen und damit zu Abweichungen des aufgenommenen Bildes von der in der Justierphase eingestellten Position kommen kann. Um dies zu vermeiden sieht eine bevorzugte Weiterbildung der Erfindung einen automatischen Modus vor. Hierbei wird nach Beendigung der Justierphase automatisch ein digitales Bild des Objekts aufgenommen, und die Bilddaten werden unter Verwendung einer Decodierungsvorschrift im elektronischen Gerät decodiert und die decodierten Daten einer Medien-Abspieleinrichtung, wie z.B. einer Audio- und/oder Videoabspieleinrichtung des Geräts zugeführt.

Wie bereits erwähnt kann der Benutzer in den drei Phasen des erfindungsgemäßen Verfahrens auf verschiedene Art und Weise angeleitet werden, um Such-, Annäherungs- bzw. Justierbewegungen durchzuführen, wobei die Auswahl des Kommunikationskanals (optisch, akustisch, taktil) insbesondere von der Perzeptionseinschränkung des jeweiligen Benutzers abhängt. Die Unterteilung des Suchvorgangs in drei Phasen erlaubt es, wie dies bevorzugt vorgesehen ist, die Signalisierung in jeder Phase auf eine andere Art vorzunehmen als in den jeweils anderen Phasen. Im folgenden werden verschiedene bevorzugte Verfahrensweisen erläutert, die sich für blinde Benutzer besonders gut eignen.

Bevorzugt ist hierbei vorgesehen, dass die Generierung eines akustischen Signals in der Suchphase eine Änderung einer physikalischen Eigenschaft, wie z.B. der Lautstärke oder der Tonhöhe, eines Dauertons umfasst. Der Dauerton signalisiert dabei, dass die Anwendung aktiv ist und sich im Suchmodus befindet. Der Benutzer kann durch Herumbewegen des Geräts das Objekt suchen und der Dauerton erfährt eine Modulation (wird z.B. lauter), wenn das Gerät das Objekt in der Suchphase identifiziert hat.

In der Annäherungsphase hingegen ist bevorzugt ein Signal mit binärem Informationsgehalt (Objekt identifiziert/nicht identifiziert) in der Regel nicht ausreichend, sondern es wäre eine Signalisierung solcherart vorteilhaft, dass der Benutzer zu definierten Annäherungsbewegungen angeleitet wird. Eine bevorzugte Verfahrensweise sieht hierbei vor, dass als akustisches Signal in der Annäherungsphase eine Sprachanweisung generiert wird. Insbesondere kann dabei vorgesehen sein, dass das elektronische Gerät für verschiedene Freiheitsgrade der Annäherungsbewegung gesonderte Sprachanweisungen gespeichert hat und dass die gespeicherten Sprachanweisungen gesondert voneinander signalisiert werden. Als Freiheitsgrade sind zum Beispiel Translationsbewegungen in drei zueinander senkrechte Raumrichtungen und Kippbewegungen um drei in zueinander senkrechten Raumrichtungen verlaufende Kippachsen zu verstehen.

In der Justierphase erfolgt die Signalisierung bevorzugt nicht durch diskrete Signalwerte, sondern durch eine kontinuierlich veränderbare Abstufung der Signale, wobei die Veränderung insbesondere von der Abweichung der aktuellen Position des Geräts von der Zielposition abhängen kann. Das Verfahren wird in diesem Zusammenhang bevorzugt derart durchgeführt, dass die Justierbewegungen in der Justierphase mittels einer Veränderung eines akustischen Signals signalisiert werden. Insbesondere umfasst die Veränderung des akustischen Signals eine Änderung eines Tonparameters, wie z.B. der Frequenz, der Lautstärke, der Dauer, der Distortion und/oder der Flanke eines Tons. Besonders bevorzugt ist jedem Freiheitsgrad der Justierbewegung hierbei ein unterschiedlicher Parameter der Tonänderung zugeordnet.

Zur weiteren Erleichterung des Auffindens der Zielposition kann vorgesehen sein, dass die vom Bildsensor während der Suchphase, der Annäherungsphase und/oder der Justierphase aufgenommenen Bilder in Echtzeit auf einer Anzeige des Geräts dargestellt werden. Dies ist jedoch nur für sehende Benutzer von Nutzen.

Die Erfindung wird nachfolgend anhand eines in der Zeichnung dargestellten Prozessablaufs näher erläutert. In dieser zeigen Fig.1 und Fig.2 die Suchphase, Fig.3 und Fig.4 die Annäherungsphase und Fig.5 und Fig.6 die Justierphase.

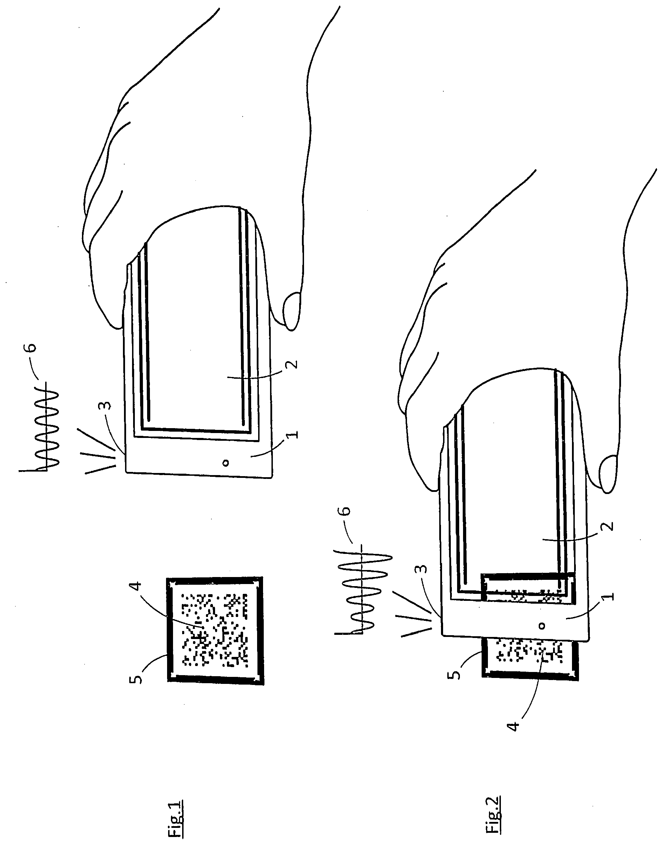

In Fig.1 ist ein mobiles Gerät in der Form eines Mobiltelefons ("Smartphone") mit 1 bezeichnet und weist eine große elektronische Anzeigevorrichtung 2 z.B. in der Form eines "touchscreens" auf. Ein Bildsensor (z.B. ein zweidimensionaler CCD-Array-Sensor) ist auf der Rückseite des Geräts 1 angeordnet und daher nicht sichtbar. Das Gerät 1 hat einen softwaremäßig zu aktivierenden Modus, in dem die von dem Bildsensor aufgenommenen Bilder kontinuierlich und in Echtzeit auf dem Bildschirm 2 als bewegtes Bild angezeigt werden. Weiters weist das Gerät 1 eine akustische Signaleinrichtung, nämlich einen Lautsprecher 3 auf. Das Gerät 1 hat eine Softwareanwendung installiert, welche die für die Ausführung des erfindungsgemäßen Verfahrens erforderlichen Funktionen zur Verfügung stellt, insbesondere die Bildaufnahme, die Bildauswertung und die Generierung von Signalen in Abhängigkeit vom Ergebnis der Bildauswertung.

Mit 4 ist das aufzufindende Objekt bezeichnet, das in dem vorliegenden Ausführungsbeispiel als von einem Rahmen 5 umgebene, rasterartige Anordnung von farbigen Bildpunkten ausgebildet ist.

Im in Fig.1 dargestellten Zustand besteht noch kein Bezug zwischen dem Gerät 1 und dem Objekt 4. Dem Benutzer wird durch einen Dauerton 6 signalisiert, dass die Suchphase aktiviert ist. In der Suchphase wird nach spezifischen Objektmerkmalen gesucht, die nur dem gesuchten Objekt entsprechen. Das spezifische Objektmerkmal kann z.B. eine besondere farbliche Ausgestaltung des Rahmens 5 des Objekts 4 sein. Die Suche erfolgt mit hoher Bildwiederholrate des Bildsensors (insbesondere 5-10 Bilder pro Sekunde) und einer niedrigen Auflösung (insbesondere 400-800 Bildpunkte vertikal und 500-1000 Bildpunkte horizontal). Die laufend von dem Bildsensor aufgenommenen Bilder werden in Echtzeit einer Bildauswertung unterzogen, die einen Algorithmus zur Kantenfindung wie z.B. nach Sobel, Canny oder Laplace umfasst, um die Anwesenheit des spezifischen Objektmerkmals innerhalb des Erfassungsbereichs des Bildsensors zu ermitteln.

Der Benutzer nimmt die Lautstärke des Dauertons 6 wahr und bewegt das Gerät 1 solange bis das Signal eine Änderung, insbesondere eine Erhöhung der Lautstärke erfährt (Fig.2). Dieses Signal wird von der Softwareanwendung generiert, sobald im Rahmen der Bildauswertung das spezifische Objektmerkmal des aufzufindenden Objekts identifiziert wird. Ab diesem Moment ist das Objekt gleichsam "gefunden" und es beginnt die Annäherungsphase.

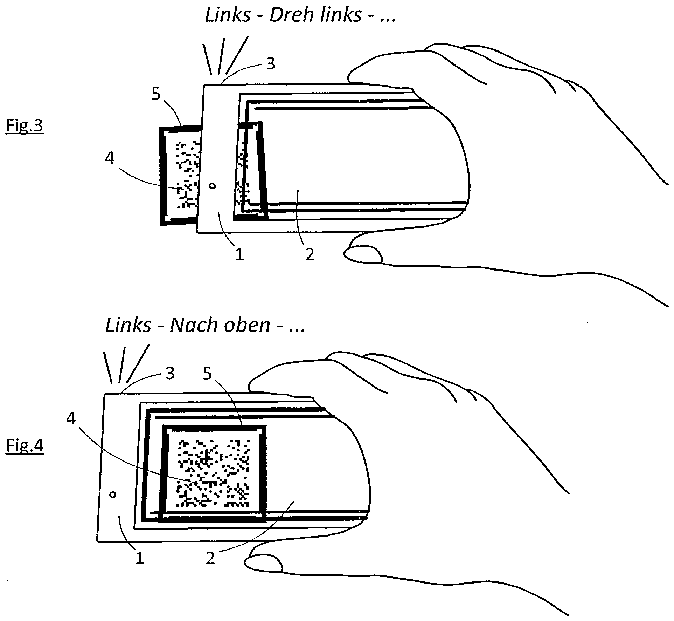

Die Annäherungsphase ist in Fig.3 und 4 dargestellt. In der Ausgangslage (Fig.3) ist das Objekt zumindest zum Teil im Erfassungsbereich des Bildsensors. Zu diesem Zeitpunkt kann die Bildwiederholrate reduziert und die Bildauflösung erhöht werden, da die Bewegungen durch die menschliche Hand gegenüber der Suchphase bereits geringfügiger sind. Hier können im Rahmen der Bildauswertung ebenfalls Algorithmen zur Kantenfindung wie in der Suchphase verwendet werden, wobei jetzt speziell die Richtung und Winkellage des Objekts berechnet wird. Die Auswertung gleicht einer "Füllstandsermittlung", d.h. einer Ermittlung, zu welchem Anteil sich das identifizierte Objekt innerhalb des Erfassungsbereichs des Bildsensors befindet. Wenn wie im vorliegenden Beispiel ein Objekt einen umlaufenden rechteckigem Rahmen 5 aufweist, so wird ermittelt, welcher Teil des Rahmens und wieviel vom gesamten Objekt sich im sichtbaren Bereich befinden.

Damit der Benutzer Annäherungsbewegungen ausführen kann, um das gesamte Objekt in den Erfassungsbereich des Bildsensors zu bringen, sind räumliche Angaben notwendig, die durch eindeutige Signalisierung erfolgen müssen. Eine Sprachausgabe hat sich am besten bewährt, da das Vermitteln von sechs Freiheitsgraden (3 Verschiebungen dx/dy/dz, 3 Verdrehungen rx/ry/rz) über eine reine Tonmodulation komplex ist und eine längere Lernkurve bedingt. Eine optische Signalisierung könnte zusätzlich unterstützend erfolgen, da die Wahrnehmung von räumlichen Darstellungen ebenfalls ein Lernen erfordert. Es hat sich herausgestellt, dass eine alternierende Abfolge von Verschiebungsanweisungen (z.B. "nach links schieben") und Verdrehungsanweisungen (z.B. "dreh links") gute Ergebnisse bringt. Anstelle einer streng alternierenden Abfolge von Verschiebungsanweisungen und Verdrehungsanweisungen kann die Entscheidung, ob eine Verschiebungsanweisung oder eine Verdrehungsanweisung generiert wird, jedes Mal auf Grund eines vorgegebenen Algorithmus getroffen werden. Beispielsweise kann so vorgegangen werden, dass der Positionsfehler im Vergleich zur Zielposition ermittelt wird, der nach Ausführung einer Verschiebungsanweisung und nach Ausführung einer Verdrehungsanweisung auftritt. Derjenigen Bewegung, aus der ein geringerer Positionsfehler resultiert, wird in der Folge der Vorzug gegeben. In der Regel werden Verdrehungen vom Benutzer gröber ausgeführt als Verschiebungen. Außerdem kann bevorzugt so vorgegangen werden, dass bei etwa gleichgroßem Fehler durch Verschiebung und Verdrehung der Verschiebung Vorrang gegeben wird. Es könnte nämlich der Fall eintreten, dass der Benutzer in eine Endlosschleife von permanenten Verdrehungsbewegungen (Dreh rechts - Dreh links - Dreh rechts - Dreh links) gerät. Mit einer vernünftigen Gewichtung kann der Benutzer aus einer solchen Endlosschleife herausgeholt werden, indem man Verschiebungen einführt, auch wenn der tatsächliche Positionsfehler eher eine Verdrehung anraten würde. Die Anwendung eines Hysterese-Algorithmus kann "Überreaktionen" des Benutzers entschärfen, indem einer physikalisch korrekten Abfolge von Bewegungsabläufen eine Dämpfung aufgezwungen wird, um der Reaktionsträgheit des Anwenders entgegenzukommen.

Erst wenn sich alle zum Objekt gehörenden Teile im Erfassungsbereich des Bildsensors bzw. im auf dem Bildschirm angezeigten Bereich befinden (Fig.4), wird zur nächsten Phase (Justierphase) übergegangen.

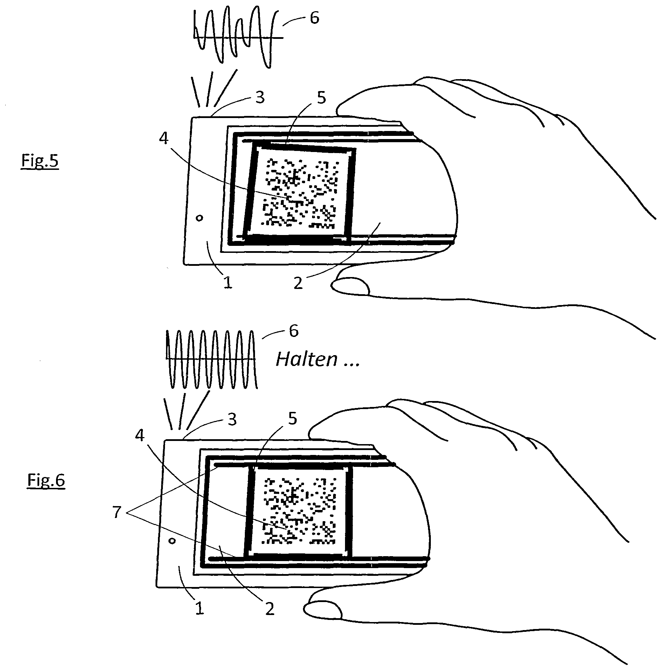

Die Justierphase ist in Fig.5 und 6 dargestellt. Sobald sich das mobile Gerät 1 in räumlichem Bezug zum Objekt 4 befindet, ist eine Feinabstimmung notwendig, um das Gerät zum "sweet spot" zu bringen, also die räumliche Lage des Gerätes, bei dem die Anwendung das bestmögliche Ergebnis erzielen kann. Hier kann weniger gut auf Sprachkommandos reagiert werden, da diese grobmotorische Bewegungen auslösen würden. Daher hat sich eine Tonmodulation als am günstigsten erwiesen, wobei der Ton wiederum nach Frequenz, aber auch nach Lautstärke, Dauer, Distortion und Flanke moduliert werden kann. Auch optische und taktile Signale sind hier zweckmäßig.

Eine Justierbewegung kann aus verschiedenen Gründen erforderlich sein. Wenn das Objekt beispielsweise relativ kleine Ausmaße hat, so muss das mobile Gerät relativ nahe an das Objekt herangebracht werden. Dadurch reduziert sich auch die Größe des "sweet spots". Daher ist es erforderlich die letzten Bewegungsabläufe der menschlichen Hand sehr feinfühlig ausführen zu lassen. Um das zu realisieren, hat sich eine Kombination von optischen und akustischen Signalen als Optimum erwiesen. Damit ist es vorteilhaft, jede Abweichung vom "sweet spot" in kleinen Wertänderungen wiederzugeben. Hier kommt vor allem die Ton-Modulation in Frequenz, Lautstärke, Dauer, Distortion und Flanke zum Einsatz. Jede Abweichung wird in die 6 Freiheitsgrade zerlegt und jedem Freiheitsgrad einer bestimmten Modulation zugeordnet. So kann der Benutzer nach einigen Übungen lernen, wie das mobile Gerät aufgrund der Ton-Modulation zu bewegen ist.

Sobald der "sweet spot" zwischen den beiden parallelen Ausrichtungslinien 7 erreicht ist (Fig.6), wird ein vordefiniertes Signal, z.B. eine Sprachanweisung, generiert oder ein taktiles Feedback (Vibration), das ein Halten des Geräts signalisiert. Weiters kann auch eine Farbänderung von Ausrichtungslinien 7 auf dem Bildschirm erfolgen. Danach löst die Anwendung selbständig die Aufnahme des Objektes aus. Schließlich wird das aufgenommene Bild decodiert und die decodierten Daten werden einer Medien-Abspieleinrichtung, wie z.B. einer Audio- und/oder Videoabspieleinrichtung, des Geräts zugeführt.

## Patentansprüche

1. Verfahren zum Auffinden eines Objekts, insbesondere einer mit einem optisch abtastbaren Code versehenen Fläche, mittels eines einen Bildsensor aufweisenden mobilen elektronischen Geräts und zum Ausrichten des mobilen Geräts an dem Objekt, umfassend,
- in einer Suchphase, das Bewegen des mobilen Geräts (1) während der Bildsensor Bilder der Umgebung erfasst und das Vornehmen einer elektronischen Bildauswertung, um charakteristische Merkmale des aufzufindenden Objekts (4) zu identifizieren, wobei bei Identifizierung des Objekts (4) ein optisches, akustisches und/oder taktiles Signal generiert wird,
- in einer Annäherungsphase, das Erfassen mittels des Bildsensors von Bildern und das Vornehmen einer elektronischen Bildauswertung dahingehend, zu welchem Anteil sich das identifizierte Objekt (4) innerhalb des Erfassungsbereichs des Bildsensors befindet, wobei in Abhängigkeit vom Ergebnis der Bildauswertung optische, akustische und/oder taktile Signale generiert werden, die dem Benutzer eine Annäherungsbewegung signalisieren, bis das gesamte Objekt (4) sich innerhalb des Erfassungsbereichs des Bildsensors befindet, und
- in einer Justierphase, das Erfassen mittels des Bildsensors von Bildern des Objekts (4) und das Vornehmen einer elektronischen Bildauswertung dahingehend, ob sich das Objekt (4) innerhalb eines vordefinierten Teilbereichsdes Erfassungsbereichs des Bildsensors befindet, wobei in Abhängigkeit vom Ergebnis der Bildauswertung optische, akustische und/oder taktile Signale generiert werden, die dem Benutzer eine Justierbewegung signalisieren, bis das gesamte Objekt (4) sich innerhalb des vordefinierten Teilbereichs des Erfassungsbereichs befindet,
**dadurch gekennzeichnet, dass** die Bilder in der Suchphase mit höherer Bildwiederholrate und/oder mit niedrigerer Bildauflösung erfasst werden als in der Annäherungsphase.

2. Verfahren nach Anspruch 1, **dadurch gekennzeichnet, dass** die Generierung eines akustischen Signals in der Suchphase eine Änderung einer physikalischen Eigenschaft, wie z.B. der Lautstärke oder der Tonhöhe, eines Dauertons (6) umfasst.

3. Verfahren nach Anspruch 1 oder 2, **dadurch gekennzeichnet, dass** als akustisches Signal in der Annäherungsphase eine Sprachanweisung generiert wird.

4. Verfahren nach Anspruch 3, **dadurch gekennzeichnet, dass** das elektronische Gerät für verschiedene Freiheitsgrade der Annäherungsbewegung gesonderte Sprachanweisungen gespeichert hat und dass die gespeicherten Sprachanweisungen gesondert voneinander signalisiert werden.

5. Verfahren nach einem der Ansprüche 1 bis 4, **dadurch gekennzeichnet, dass** die Justierbewegungen in der Justierphase mittels einer Veränderung eines akustischen Signals signalisiert werden.

6. Verfahren nach Anspruch 5, **dadurch gekennzeichnet, dass** die Veränderung des akustischen Signals eine Änderung eines Tonparameters, wie z.B. der Frequenz, der Lautstärke, der Dauer, der Distortion und/oder der Flanke eines Tons umfasst.

7. Verfahren nach Anspruch 6, **dadurch gekennzeichnet, dass** jedem Freiheitsgrad der Justierbewegung ein unterschiedlicher Parameter der Tonänderung zugeordnet ist.

8. Verfahren nach einem der Ansprüche 1 bis 7, **dadurch gekennzeichnet, dass** nach Beendigung der Justierphase automatisch ein digitales Bild des Objekts (4) aufgenommen wird, die Bilddaten unter Verwendung einer Decodierungsvorschrift im elektronischen Gerät (1) decodiert werden und die decodierten Daten einer Medien-Abspieleinrichtung, wie z.B. einer Audio- und/oder Videoabspieleinrichtung, des Geräts (1) zugeführt werden.

9. Verfahren nach einem der Ansprüche 1 bis 8, **dadurch gekennzeichnet, dass** die vom Bildsensor während der Suchphase, der Annäherungsphase und/oder der Justierphase aufgenommenen Bilder in Echtzeit auf einer Anzeige (2) des Geräts (1) dargestellt werden.

10. Verfahren nach einem der Ansprüche 1 bis 9, **dadurch gekennzeichnet, dass** die Bildauswertung in der Suchphase einen Algorithmus zur Kantenfindung, insbesondere einen Sobel-Algorithmus, einen Laplace-Filter oder einen Canny-Algorithmus, umfasst.

## Claims

1. A method for finding an object, in particular a surface provided with an optically scannable code, by means of a mobile electronic device comprising an image sensor, and for aligning the mobile device on the object, comprising:
- in a search phase, moving the mobile device (1) while the image sensor detects images of the environment, and performing an electronic image evaluation to identify characteristic features of the object (4) to be found, wherein an optical, acoustic and/or tactile signal is generated during the identification of the object (4),
- in an approach phase, detecting images by means of the image sensor and performing an electronic image evaluation to determine the portion by which the identified object (4) is within the detection area of the image sensor, wherein, as a function of the result of the image evaluation, optical, acoustic and/or tactile signals are generated, which signalize to the user an approaching movement until the entire object (4) is within the detection area of the image sensor, and
- in an adjustment phase, detecting images of the object (4) by means of the image sensor and performing an electronic image evaluation to determine whether the object (4) is within a predefined subarea of the detection area of the image sensor, wherein, as a function of the result of the image evaluation, optical, acoustic and/or tactile signals are generated, which signalize to the user an adjusting movement until the entire object (4) is within the predefined subarea of the detection area,
**characterized in that** the images in the search phase are detected at a higher image repetition rate and/or at a lower image resolution than in the approach phase.

2. A method according to claim 1, **characterized in that** the generation of an acoustic signal in the search phase comprises changing a physical property, e.g. the volume or the pitch, of a continuous tone (6).

3. A method according to claim 1 or 2, **characterized in that** a language statement is generated as an acoustic signal in the approach phase.

4. A method according to claim 3, **characterized in that** the electronic device has stored separate language statements for different degrees of freedom of the approaching movement, and that the stored language statements are signaled separately.

5. A method according to any one of claims 1 to 4, **characterized in that** the adjusting movements in the adjustment phase are signaled by changing an acoustic signal.

6. A method according to claim 5, **characterized in that** the changing of the acoustic signal comprises changing a tone parameter such as the frequency, the volume, the duration, the distortion and/or the edge of a tone.

7. A method according to claim 6, **characterized in that** a different parameter of the tone change is assigned to each degree of freedom of the adjusting movement.

8. A method according to any one of claims 1 to 7, **characterized in that**, after having completed the adjustment phase, a digital image of the object (4) is automatically taken, the image data are decoded in the electronic device (1) using a decoding instruction, and the decoded data are supplied to a media playing device, e.g. an audio and/or video playing device, of the device (1).

9. A method according to any one of claims 1 to 8, **characterized in that** the images taken by the image sensor during the search phase, the approach phase and/or the adjustment phase are represented in real time on a display (2) of the device (1).

10. A method according to any one of claims 1 to 9, **characterized in that** the image evaluation in the search phase comprises an edge finding algorithm, in particular a Sobel algorithm, a Laplace filter, or a Canny algorithm.

## Revendications

1. Procédé pour trouver un objet, en particulier une surface munie d'un code pouvant être balayé optiquement, au moyen d'un dispositif électronique mobile comprenant un capteur d'image, et pour orienter le dispositif mobile vers l'objet, comprenant,
- dans une phase de recherche, le déplacement du dispositif mobile (1) pendant que le capteur d'image capture des images de l'environnement et la réalisation d'une analyse d'image électronique, pour identifier des éléments caractéristiques de l'objet trouvé (4), dans lequel lors de l'identification de l'objet (4), un signal acoustique et/ou tactile est généré,
- dans une phase d'approche, la capture d'images au moyen du capteur d'image et la réalisation d'une analyse d'image électronique inhérente, selon la mesure dans laquelle l'objet identifié (4) se trouve dans la zone de capture du capteur d'image, dans lequel selon le résultat de l'analyse d'image, des signaux optiques, acoustiques et/ou tactiles sont générés, qui signalent à l'utilisateur un déplacement d'approche, jusqu'à ce que l'objet entier (4) se trouve dans la zone de capture du capteur d'image, et
- dans une phase de réglage, la capture d'images de l'objet (4) au moyen du capteur d'image et la réalisation d'une analyse d'image électronique inhérente si l'objet (4) se trouve dans une sous-zone prédéfinie de la zone de capture du capteur d'image, dans lequel selon le résultat de l'analyse d'image, des signaux optiques, acoustiques et/ou tactiles sont générés, qui signalent à l'utilisateur un déplacement de réglage jusqu'à ce que l'objet entier (4) se trouve dans la sous-zone prédéfinie de la zone de capture,
**caractérisé en ce que** les images sont capturées dans la phase de recherche avec une fréquence d'images plus élevée et/ou avec une résolution d'image inférieure à celle(s) de la phase d'approche.

2. Procédé selon la revendication 1, **caractérisé en ce que** la génération d'un signal acoustique dans la phase de recherche comprend un changement d'une propriété physique, comme par exemple le volume ou la hauteur de son d'une tonalité continue (6).

3. Procédé selon la revendication 1 ou 2, **caractérisé en ce qu'**une commande vocale est générée en tant que signal acoustique dans la phase d'approche.

4. Procédé selon la revendication 3, **caractérisé en ce que** le dispositif électronique a stocké des commandes vocales séparées pour différents degrés de liberté du déplacement d'approche, et **en ce que** les commandes vocales stockées sont signalées séparément les unes des autres.

5. Procédé selon l'une des revendications 1 à 4, **caractérisé en ce que** les déplacements de réglage sont signalés dans la phase de réglage au moyen d'un changement d'un signal acoustique.

6. Procédé selon la revendication 5, **caractérisé en ce que** le changement du signal acoustique comprend un changement d'un paramètre de son, comme par exemple la fréquence, le volume, la durée, la distorsion et/ou la pente d'un son.

7. Procédé selon la revendication 6, **caractérisé en ce que** chaque degré de liberté du déplacement de réglage est associé à un paramètre différent du changement de son.

8. Procédé selon l'une des revendications 1 à 7, **caractérisé en ce qu'**après l'achèvement de la phase de réglage, une image numérique de l'objet (4) est automatiquement enregistrée, les données d'image sont décodées en utilisant une règle de décodage dans le dispositif électronique (1), et les données décodées sont fournies à un lecteur multimédia, comme par exemple un lecteur audio et/ou vidéo, du dispositif (1).

9. Procédé selon l'une des revendications 1 à 8, **caractérisé en ce que** les images enregistrées par le capteur d'image pendant la phase de recherche, la phase d'approche et/ou la phase de réglage sont affichées en temps réel sur un dispositif d'affichage (2) du dispositif (1).

10. Procédé selon l'une des revendications 1 à 9, **caractérisé en ce que** l'analyse d'image dans la phase de recherche comporte un algorithme de recherche de bord, en particulier un algorithme de Sobel, un filtre de Laplace ou un algorithme de Canny.
